# EUROPÄISCHE PATENTSCHRIFT

(11) **EP 0 363 609 B1**
(45) Veröffentlichungstag und Bekanntmachung des Hinweises auf die Patenterteilung: **03.11.1993**
(21) Anmeldenummer: 89115370.2
(22) Anmeldetag: 21.08.1989
(51) Int. Cl.: H04R 25/00

(54) **Digitales Programmiergerät für Hörgeräte**
Digital programming attachment for hearing aids
Appareil de programmation digital pour appareils de correction auditive

(30) Priorität: 13.10.1988 DE 3834962
(43) Veröffentlichungstag der Anmeldung: 18.04.1990
(73) Patentinhaber: Siemens Audiologische Technik GmbH, 91058 Erlangen (DE)
(72) Erfinder: Meyer, Wolfram, D-8521 Möhrendorf (DE); Kaiser, Eduard, D-8550 Forchheim (DE); Sigwanz, Ullrich, D-8520 Erlangen (DE); Larsen, Soeren, Dipl.-Ing., DK-5250 Odense (DK)
(74) Vertreter: Fuchs, Franz-Josef, Dr.-Ing.

(56) Entgegenhaltungen:
- EP-A- 0 163 775
- EP-A- 0 180 428
- DE-U- 8 812 896
- HEARING INSTRUMENTS, Band 38, Nr. 11, November 1987, Seiten 28,30,32,33,74, Cleveland, Ohio, US; G.P. WIDIN: "The meaning of digital technology"

## Beschreibung

Die Erfindung betrifft ein Programmiergerät für digital programmierbare Hörgeräte.

Ein bekanntes Programmiergerät dieser Art (Programmiergerät PHOX der Fa. micro-technik GmbH, Stuttgart, Deutschland) ist lediglich zum Programmieren der Hörgeräte eines bestimmten Herstellers mit bestimmten akustischen Eigenschaften verwendbar. Ein Hörgeräteakustiker, der verschiedene Hörgeräte mehrerer Hersteller anbieten möchte, würde zur Anpassung der Hörgeräte dieses Sortiments eine Palette dazu passender Programmiergeräte benötigen. Damit ist jedoch keine praxisgerechte Handhabung möglich, ganz abgesehen von der erforderlichen kostenintensiven Ausstattung.

Aus dem Dokument HEARING INSTRUMENTS, Band 38, Nr. 11, Nov. 1987, Seiten 28, 30, 32 und 33 sowie 74, US, G.P. WIDIN: "The meaning of digital technology" ist eine Programmieranordnung für digital programmierbare Hörgeräte bekannt, wobei die Programmieranordnung einen Computer (PC) mit Peripheriebausteinen und einen Arbeitsspeicher umfaßt. Der Computer ist mit Hörgeräten nur eines Herstellers mit dem Ziel koppelbar, die Kontrolle des Akustikers über den genauen Hörgeräte-Einstellungs-Prozeß zu erhöhen und die erforderliche Einstellung sicher auszuführen.

Der Erfindung liegt die Aufgabe zugrunde, ein Programmiergerät zu schaffen, mit dem digital programmierbare, ein- und mehrkanalige Hörgeräte verschiedener Hersteller und/oder Hörgeräte mit unterschiedlichen akustischen Kenndaten einstellbar sind, ohne daß eine Firma auf die Daten einer anderen Firma zugreifen kann.

Erfindungsgemäß wird diese Aufgabe mit einem Programmiergerät für digital programmierbare Hörgeräte gelöst, wobei ein Mikrocontroller mit Peripherie-Bausteinen und einem Arbeitsspeicher sowie mehreren Steckplätzen zur Aufnahme austauschbarer Firmen-Programm-Module (Speicher-Kassette) verschiedener Hersteller vorgesehen sind, wobei durch die Firmen-Programm-Module die Kompatibilität zwischen dem Programmiergerät und den zu programmierenden Hörgeräten verschiedener Hersteller herstellbar ist, wobei in jedem Firmen-Programm-Modul die Kenndaten (Funktionsmerkmale, elektroakustischen Hörgerätedaten, Anpaßdaten, Bedienablauf, Berechnungsalgorithmen usw.) des zu programmierenden Hörgerätes gespeichert sind, und wobei ein weiterer Steckplatz für ein Master-Programm-Modul vorgesehen ist, derart, daß beim Einschalten des Programmiergerätes das MasterProgramm-Modul selektiert wird und über das Master-Programm-Modul durch einen Lesevorgang der Firmen-Programm-Module feststellbar ist, ob ein Steckplatz belegt oder nicht belegt ist und welche Firmen-Programm-Module in den Steckplätzen vorhanden sind, und daß das Master-Programm-Modul eine Speichereinstellung eines weiteren Speichers (8) verwaltet, in welchem in zugewiesenen Speicherbereichen individuelle Parameter von Hörgeräten verschiedener Hersteller abspeicherbar sind, wobei die Speicherbereiche durch eine Verriegelung gegen unberechtigten Datenzugriff geschützt sind.

In vorteilhafter Ausgestaltung ist vorgesehen, daß an einem Display der Hersteller und/oder der Typ des zu programmierenden Hörgerätes angezeigt wird.

Ferner ist es zur einfacheren Bedienung des Programmiergerätes möglich, am Display den Bedienablauf für das eingesteckte Firmen-Programm-Modul anzuzeigen.

Weitere vorteilhafte Ausgestaltungen der Erfindung sind in den Patentansprüchen gekennzeichnet.

Die zwischen Programmiergerät und Hörgerät vorhandene Schnittstelle zeichnet sich dadurch aus, daß sie durch softwaremäßige Programmierung in weiten Bereichen (Signalpegel, Signalrichtung, Signalimpedanz, halb- und vollduplex Einstellung) an unterschiedliche Hörgeräteschnittstellen, wie sie beim Anschluß verschiedener Hörgeräte auftreten können, anpaßbar ist.

Es zeigen:
Figur 1 ein Blockschaltbild des erfindungsgemäßen Programmiergerätes,
Figur 2 einen Ausschnitt aus Figur 1 zusätzlich mit einem Schnittstellen-Multiplexer.

Mit dem Programmiergerät nach der Erfindung können digital programmierbare Hörgeräte (HdO- und IdO-Geräte) verschiedener Hersteller eingestellt werden. Dadurch kommt der Hörgeräteakustiker mit einem Programmiergerät aus, das ihm eine einheitliche Bedienung ermöglicht. Das mit einem Mikrocontroller 1 ausgerüstete Programmiergerät schafft die Voraussetzung, alle ein- und mehrkanaligen digital programmierbaren Hörgeräte, die mit einem in einem Master-Programm-Modul 5 gespeicherten System übereinstimmen, zu programmieren. Durch austauschbare Firmen-Programm-Module 4a-4n wird die Kompatibilität des Programmiergerätes mit den verschiedenen, dafür vorgesehenen Hörgeräten hergestellt. Somit können auch zukünftige digital programmierbare, ein- und mehrkanalige Hörgerätegenerationen jederzeit durch Aktualisierung der herstellerspezifischen Firmen-Programm-Module dem System des Programmiergerätes angepaßt werden. Das Programmieren der Hörgeräte kann daher nach einer einheitlichen Bedienphilosophie erfolgen. Es können beispielsweise fünf herstellerspezifische Firmen-Programm-Module gleichzeitig eingesteckt sein und über das Master-Programm-Modul angesteuert werden. Durch die Möglichkeit, die steckbaren Firmen-Programm-Module sowie das Master-Programm-Modul auszutauschen, ist das Programmiergerät bereits jetzt für künftige Generationen von digital programmierbaren Hörgeräten verschiedener Hersteller vorbereitet.

Für die Vorwahl in der Anpassung stehen z.B. acht verschiedene Grundeinstellungen zur Verfügung. Der Hörgeräteakustiker kann diesen Grundeinstellungen beispielsweise sechs weitere nach seinen individuellen Erfordernissen hinzufügen. Für den sofortigen Vergleich verschiedener, während der Anpaßphase erarbeiteter Einstellungen sind z.B. 16 weitere Speicherplätze anwählbar. Der Hörgeräteakustiker kann somit seinen Kunden eine Vielzahl verschiedener Hörgeräte-Einstellungen zur Feinanpassung anbieten und dann die optimale Einstellung im Hörgerät dauerhaft speichern. Während des gesamten Einstellvorganges kann das Hörgerät am Kopf des Schwerhörigen bleiben. Zur Übernahme der Daten durch einen Personal-Computer und einen Drucker stehen zwei serielle RS 232-Schnittstellen 12 und 15 zur Verfügung. Nach einem Ausführungsbeispiel der Erfindung können somit bis zu 16 unterschiedliche Hörgeräteeinstellungen im Verlauf eines Anpaßvorganges vom Hörgeräteakustiker zwischengespeichert und dem Probanden für einen schnellen akustischen Vergleich vorgestellt werden. Dadurch können Sprachverständlichkeit und Klang von jeweils zwei unterschiedlichen Einstellungen bereits während eines kurzen Satzes subjektiv verglichen und beurteilt werden. Ein weiterer Speicher des Programmiergerätes enthält acht unterschiedliche Gerätegrundeinstellungen, auf die vom Hörgeräteakustiker jederzeit zurückgegriffen werden kann. Außerdem können zusätzlich sechs individuelle Parametersätze nach Wahl des Hörgeräteakustikers eingegeben werden.

Die Schnittstellen 12, 14 und 15 enthalten Optokoppler und getrennte Stromversorgungen, damit die Sicherheitsbedingungen für medizinische Geräte auch beim Anschluß üblicher Personal-Computer und Drucker erfüllt werden.

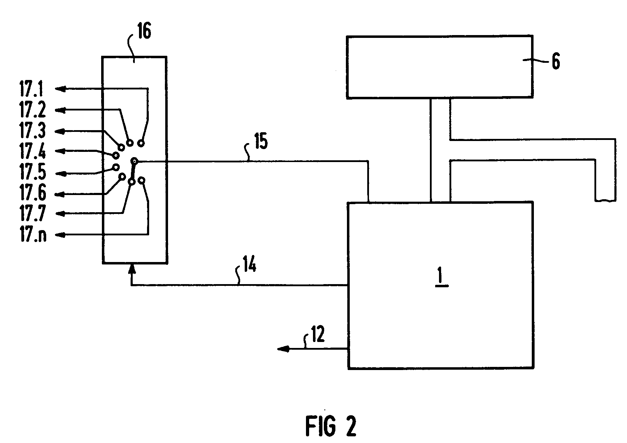

Weitere Peripheriegeräte sind gemäß Figur 2 über einen Multiplexer 16, welcher einfach und kostensparend mit dem erfindungsgemäßen Programmiergerät über eine parallele Schnittstelle 14 und eine serielle Schnittstelle 15 verbunden ist, anschließbar. Der Multiplexer 16 verfügt über Anschlüsse 17.1 bis 17.n. Durch die Steuerung des Multiplexers 16 über die parallele Schnittstelle 14, z.B. Centronics-Schnittstelle, wird keine eigene intelligente Steuereinheit im Multiplexer benötigt. Mit acht Leitungen einer parallelen Schnittstelle sind bis zu 256 Anschlüsse realisierbar. In der Praxis kann daher- die Anzahl der Leitungen der parallelen Schnittstelle 14 am Programmiergerät meistens reduziert werden. Der Multiplexer 16 kann mit Relais zur Umschaltung der seriellen Schnittstelle 15 realisiert werden, wodurch Pegelprobleme einfacher beherrschbar sind. Der Multiplexer 16 kann alternativ an die als serielle Schnittstelle ausgebildete Schnittstelle 12 angeschlossen werden, wodurch die weitere serielle Schnittstelle 15 entfallen kann. Ein peripherer Personalcomputer kann sodann z.B. mit dem Anschluß 17.1 und andere periphere Geräte können mit den Anschlüssen 17.2 bis 17.n verbunden werden.

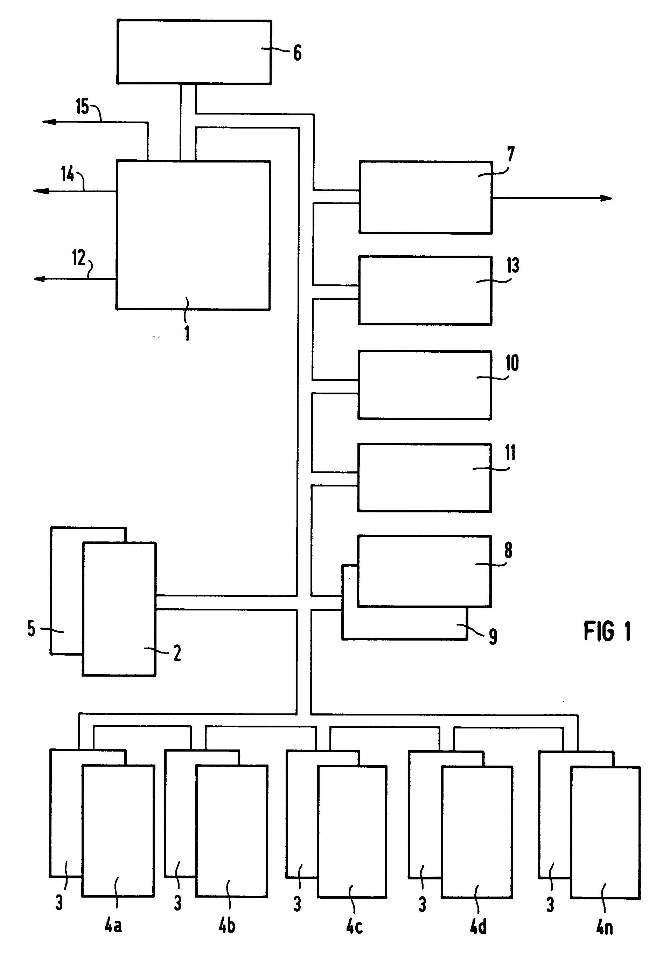

Das mikrocontrollergesteuerte Programmiergerät gemäß der Erfindung mit seinen herstellerspezifischen Firmen-Programm-Modulen 4a-4n (Figur 1) kontrolliert und koordiniert interne Funktionsabläufe, speichert Daten und läßt nur sinnvolle Parametereinstellungen zu. Das Master-Programm-Modul 5 beinhaltet alle hörgerätespezifischen Programme eines Hörgeräteherstellers, die für die Programmierung und den Datendialog seiner Hörgeräte notwendig sind. Auf einem beispielsweise achtzeiligen Liquid-Crystal-Display 6 werden alle Parameterwerte übersichtlich dargestellt. Die Einstellarbeit kann erheblich durch einen unterstützenden Text und die schematische Abbildung der Übertragungscharakteristik erleichtert werden.

Durch ergonomische Anordnung der Tastatur 13 und ihre Kennzeichnung wird für den Benutzer eine übersichtliche und zielsichere Bedienung des Programmiergerätes erreicht. Logisch zusammenhängende Funktionsabläufe werden per Tastendruck abgerufen und ausgeführt. Die Zahl der Tasten ist vorzugsweise auf die wesentlichen Gerätefunktionen begrenzt; Praxisnähe, leichte Erlernbarkeit sowie Übersichtlichkeit sind die Basis für die einheitliche Bedienphilosophie. So werden z.B. bei Betätigung einer Funktionstaste (Read) alle Parameterwerte des angeschlossenen Hörgerätes direkt auf das Display 6 übernommen. Mit weiteren Funktionstasten können Parametereinstellungen geändert, die Abspeicherung vollständiger Geräteeinstellungen (Store) sowie der Wiederaufruf (Recall) dieser Geräteeinstellungen durchgeführt werden. Danach können einzelne neue Parameterwerte oder ein kompletter Parametersatz mit einer Taste (Prog) im Hörgerät gespeichert werden.

### Funktionsbeschreibung eines Ausführungsbeispieles:

Beim Einschalten des Programmiergerätes wird immer das Master-Programm-Modul 5 selektiert. Dieses Modul 5 hat einen Speicherbereich von OK-64K zur Verfügung. Die Firmen-Programm-Module 4a-4n können den Speicherbereich von 60K-64K nicht ausnutzen, da in diesem Adreßraum Programme im Master-Programm-Modul 5 stehen, die von jedem Firmen-Programm-Modul angesprochen werden können. Die Software des Master-Programm-Moduls kann durch einen Lesevorgang der Firmen-Programm-Module feststellen, ob ein Steckplatz 3 belegt oder nicht belegt ist. Die Software für diesen Lesevorgang muß im Adreßraum zwischen 60K und 64K im Master-Programm-Modul stehen. Anschließend werden alle Firmennamen, die in ihren jeweiligen Firmen-Programm-Modulen 4a-4n an definierten Steckplätzen 3 abgelegt sein müssen, am LC-Display 6 zur Anzeige gebracht. Der Hörgeräteakustiker hat nun die Möglichkeit, mit Cursor-Tasten die Firma zu wählen und mit einer Enter-Taste das gewünschte Firmen-Programm-Modul zu selektieren.

Das Master-Programm-Modul 5, dem der Steckplatz 2 zugeordnet ist, übernimmt folgende Software-Aufgaben:
- Lesen der Steckplätze 3 und Feststellung, welche Firmen-Programm-Module 4a-4n vorhanden sind,
- Anzeige der vorhandenen Firmen-Programm-Module 4a-4n mit jeweiligem Firmennamen am LC-Display 6,
- Benutzerführung für die Modulauswahl am LC-Display,
- Starten der Software des ausgewählten Firmen-Programm-Moduls,
- Abschalten eines Firmen-Moduls, wenn dieses mit EXIT beendet werden soll und zurück zur Modulauswahl,
- eine modulinterne EPROM-Umschaltung zur Erweiterung des Programmspeichers von 60kB auf 120 kB ist möglich.

Das Programmiergerät weist ferner ein batteriegepuffertes RAM mit einer Kapazität von 32 KByte auf. Da jeder Hörgeräte-Hersteller seine eigenen individuellen SETUP's abspeichern muß, wird jedem Hersteller aufgrund des Firmennamens ein 1KByte-Bereich zugewiesen. Eine Hardware-Verriegelung verhindert, daß eine Firma auf die Daten einer anderen Firma zugreifen kann. Die Speichereinstellung wird von der Software des Master-Programms verwaltet.

### Bedienung am Programmiergerät zur Wahl des Firmen-Programm-Moduls:

Am LC-Display 6 erscheinen die Firmennamen, die vom Master-Programm-Modul 5 gefunden wurden. Diejenige Firma, die mit dem Cursor aktuell angewählt wird, wird am Display invers dargestellt. Der Anwender kann nun durch Betätigung der Cursor-Tasten die gewünschte Firma selektieren und durch Drücken der Enter-Taste die Software des angewählten Firmen-Moduls starten.

### Bedienung am Programmiergerät zur Hörgeräteauswahl:

Die Auswahl eines Hörgerätes soll nur zur Anzeige gebracht werden, wenn im Firmen-Programm-Modul mehr als ein Hörgerätetyp zur Auswahl steht. Durch Betätigung der Cursor-Tasten kann der gewünschte Hörgerätetyp selektiert werden. Der momentan angewählte Hörgerätetyp erscheint am Display 6 z.B. in inverser Darstellung. Mit Hilfe der Enter-Taste wird die Software zur Programmierung des gewählten Hörgerätes gestartet.

### Bedienablauf bei der Hörgeräteprogrammierung:

Durch Betätigung der Cursor-Tasten wird der zu programmierende Parameter angewählt. Der Parametertext erscheint dann am Display. Über die Tastatur 13 läßt sich der Zahlenwert des Parameters verändern. Die Übertragungskurve der wirksamen akustischen Verstärkung kann bei jeder Zahlenwertänderung aktualisiert werden. Für die AGC-Einstellung kann durch Betätigung der Cursor-Tasten der zu programmierende Parameter ebenfalls selektiert werden. Ein dazugehöriger Text erscheint dann am Display. Über Tasten der Folientastatur 13 läßt sich der Zahlenwert des Parameters erhöhen oder erniedrigen. Der AGC-Knickpunkt wird für jeden Kanal eines mehrkanaligen Hörgerätes graphisch dargestellt und bei jeder Zahlenwertänderung aktualisiert.

Im Blockschaltbild sind mit den Bezugsziffern 7 eine Hörgeräte-Schnittstelle, mit 8 ein Schreib-Lese-Speicher, mit 9 ein Steckplatz für ein Modul des Schreib-Lese-Speichers 8, mit 10 ein Arbeitsspeicher und mit 11 ein weiterer Arbeitsspeicher bezeichnet.

## Patentansprüche

1. Programmiergerät für digital programmierbare Hörgeräte, umfassend einen Mikrocontroller (1) mit Peripherie-Bausteinen und einen Arbeitsspeicher (10, 11) sowie mehrere Steckplätze (3) zur Aufnahme austauschbarer Firmen-Programm-Module (4a-4n) verschiedener Hersteller, wobei durch die Firmen-Programm-Module die Kompatibilität zwischen dem Programmiergerät und den zu programmierenden Hörgeräten der verschiedenen Hersteller herstellbar ist, wobei in jedem Firmen-Programm-Modul die Kenndaten (Funktionsmerkmale, elektroakustischen Hörgerätedaten, Anpaßdaten, Bedienablauf, Berechnungsalgorithmen usw.) des zu programmierenden Hörgerätes gespeichert sind, und wobei ein weiterer Steckplatz (2) für ein Master-Programm-Modul (5) vorgesehen ist, derart, daß beim Einschalten des Programmiergerätes das Master-Programm-Modul selektiert wird und über das Master-Programm-Modul durch einen Lesevorgang der Firmen-Programm-Module feststellbar ist, ob ein Steckplatz (3) belegt oder nicht belegt ist und welche Firmen-Programm-Module (4a-4n) in den Steckplätzen vorhanden sind, und daß das Master-Programm-Modul (5) eine Speichereinstellung eines weiteren Speichers (8) verwaltet, in welchem in zugewiesenen Speicherbereichen individuelle Parameter von Hörgeräten verschiedener Hersteller abspeicherbar sind, wobei die Speicherbereiche durch eine Verriegelung gegen unberechtigten Datenzugriff geschützt sind.

2. Programmiergerät nach Anspruch 1, **dadurch gekennzeichnet,** daß der Hersteller und/oder der Typ des zu programmierenden Hörgerätes an einem Display (6) angezeigt wird.

3. Programmiergerät nach Anspruch 1 und 2, **dadurch gekennzeichnet,** daß am Display (6) der Bedienablauf zu dem jeweils im Steckplatz (3) befindlichen Firmen-Programm-Modul (4a-4n) anzeigbar ist.

4. Programmiergerät nach Anspruch 1, **dadurch gekennzeichnet,** daß der weitere Speicher (8) ein Schaltkreis mit einem nicht flüchtigen Schreib-Lese-Speicher (RAM) ist und die individuellen Parametersätze verschiedener Hörgeräte von einem Hörgeräteakustiker festgelegte und abgespeicherte Parametersätze (SETUP's) sind.

5. Programmiergerät nach Anspruch 4, **dadurch gekennzeichnet,** daß der Schaltkreis (Speicher 8) als Modul in das Programmiergerät (Steckplatz 9) einsetzbar und auswechselbar ist.

6. Programmiergerät nach Anspruch 1 und 4, **dadurch gekennzeichnet,** daß in dem nicht flüchtigen Schreib-Lese-Speicher (RAM) die Speicherbereiche Unterspeicher sind, die über das Master-Programm-Modul (5) den jeweiligen Firmen-Programm-Modulen (4a-4n) zugeordnet werden und daß das Master-Programm-Modul sicherstellt, daß jedes Firmen-Programm-Modul nur einen Zugriff zu dem ihm vom Master-Programm-Modul zugeordneten Unterspeicher des nicht flüchtigen Schreib-Lese-Speichers erhält.

7. Programmiergerät nach Anspruch 1 und 6, **dadurch gekennzeichnet,** daß für die Feineinstellung des zu programmierenden Hörgerätes mehrere verschiedene Grundeinstellungen vorgesehen sind, daß der Hörgeräteakustiker neben diesen Grundeinstellungen weitere, nach seinen individuellen Erfordernissen ausgelegte Einstellungen ablegen kann.

8. Programmiergerät nach Anspruch 7, **dadurch gekennzeichnet,** daß für den sofortigen Vergleich verschiedener, während der Anpaßphase erarbeiteter akustischer Werte weitere Speicherplätze anwählbar sind.

9. Programmiergerät nach einem der Ansprüche 1 bis 8, **dadurch gekennzeichnet,** daß die eingestellten Hörgeräte-Parameter über eine Standardschnittstelle (12) am Programmiergerät von einem Personal-Computer oder einem Drucker übernommen werden können.

10. Programmiergerät nach Anspruch 1, **dadurch gekennzeichnet,** daß die zwischen Programmiergerät und Hörgerät vorhandene Schnittstelle (7) sich dadurch auszeichnet, daß mittels softwaregesternerter DA-Konverter die Einstellung verschiedener Spannungspegel und Komparatorschwellen, daß mittels AD-Konvertern eine Impedanzabfrage, daß eine Einstellung des halb- und vollduplex Betriebes durch softwaregesteuerte Halbleiterschalter und daß durch softwaregesteuerte Halbleiterschalter ein Zu- und Abschalten verschiedener pull up und pull down Widerstände erfolgt.

11. Programmiergerät nach Anspruch 1 und 10, **gekennzeichnet durch** einen Umschalter zum Zwecke der binauralen Anpassung.

12. Programmiergerät nach Anspruch 1, **dadurch gekennzeichnet,** daß es eine parallele und wenigstens eine serielle Schnittstelle (14 bzw. 12, 15) aufweist, die so mit einem Multiplexer (16) verbunden sind, daß über die parallele Schnittstelle (14) der Multiplexer (16) gesteuert wird und die serielle Schnittstelle (15) auf einen der Ausgänge (17.1 bis 17.n) des Multiplexers (16) durchschaltbar ist.

13. Programmiergerät nach Anspruch 12, **dadurch gekennzeichnet,** daß der Multiplexer (16) für die Umschaltung der seriellen Schnittstelle (15) Relais aufweist.

## Claims

1. Programming device for digitally programmable hearing aids, comprising a micro-controller (1) with peripheral modules and a main memory (10, 11) and also several plug-in locations (3) for receiving interchangeable company program modules (4a-4n) of various manufacturers, in which case compatibility between the programming device and the hearing aids to be programmed of the various manufacturers can be established by means of the company program modules; the characteristic data (function features, electroacoustic hearing aid data, matching data, operating sequence, calculation algorithms etc.) of the hearing aid to be programmed is stored in each company program module; and a further plug-in location (2) for a master program module (5) is provided in such a way that when the programming device is switched on, the master program module is selected and it is possible to ascertain by way of the master program module by means of a read operation of the company program modules whether a plug-in location (3) is occupied or is not occupied and which company program modules (4a-4n) are present in the plug-in locations and so that the master program module (5) administers a memory setting of a further memory (8) in which in allocated memory areas individual parameters of hearing aids of various manufacturers can be stored, with the memory areas being protected by means of a locking mechanism against unauthorized data access.

2. Programming device according to claim 1, characterised in that the manufacturer and/or the type of hearing aid to be programmed are/is indicated on a display (6).

3. Programming device according to claim 1 and 2, characterised in that the operating sequence in respect of the respective company program module (4a-4n) located in the plug-in location (3) can be indicated on the display (6).

4. Programming device according to claim 1, characterised in that the further memory (8) is a switching circuit with a non-volatile read-write memory (RAM) and the individual sets of parameters of various hearing aids are sets of parameters (SETUP'S) which are fixed by a hearing aid acoustician and stored.

5. Programming device according to claim 4, characterised in that the switching circuit (memory 8) can be inserted as a module into the programming device (plug-in location 9) and is interchangeable.

6. Programming device according to claim 1 and 4, characterised in that in the non-volatile read-write memory (RAM) the memory areas are sub-memories which by way of the master program module (5) are allocated to the respective company program modules (4a-4n) and in that the master program module guarantees that each company program module only obtains access to the sub-memory of the non-volatile read-write memory allocated to it by the master program module.

7. Programming device according to claim 1 and 6, characterised in that several different basic settings are provided for the fine adjustment of the hearing aid which is to be programmed, so that the hearing aid acoustician can store, in addition to these basic settings, further settings interpreted according to his individual requirements.

8. Programming device according to claim 7, characterised in that further memory locations can be selected for the immediate comparison of various acoustic values which are acquired during the matching phase.

9. Programming device according to one of the claims 1 to 8, characterised in that the set hearing aid parameters can be taken up by a personal computer or a printer by way of a standard interface (12) at the programming device.

10. Programming device according to claim 1, characterised in that the interface (7) present between programming device and hearing aid is distinguished in that various voltage levels and comparator thresholds are set by means of software-controlled digital-to-analog converters, in that an impedance interrogation is effected by means of analog-to-digital converters, in that the half- and full-duplex modes are adjusted by means of software-controlled semiconductor switches and in that various pull up and pull down resistors are switched on and off by means of software-controlled semiconductor switches.

11. Programming device according to claim 1 and 10, characterised by a change-over switch for the purposes of binaural adaptation.

12. Programming device according to claim 1, characterised in that it has a parallel and at least one serial interface (14 and 12, 15 respectively) which are connected with a multiplexer (16) in such a way that the multiplexer (16) is controlled by way of the parallel interface (14) and the serial interface (15) can be switched through to one of the outputs (17.1 to 17.n) of the multiplexer (16).

13. Programming device according to claim 12, characterised in that the multiplexer (16) has relays for the switch-over of the serial interface (15).

## Revendications

1. Appareil de programmation pour des appareils de correction auditive programmables numériquement, comprenant un micro-contrôleur (1) pourvu de modules périphériques et une mémoire de travail (10,11), ainsi que plusieurs postes de connexion (3) servant à recevoir des modules interchangeables de programmes de sociétés (4a-4n) de différents fabricants, dans lequel la compatibilité entre l'appareil de programmation et les appareils de correction auditive, qui doivent être programmés, des différents fabricants peut être établie au moyen des modules de programmes de sociétés, les données caractéristiques (caractéristiques fonctionnelles, données électro-acoustiques de l'appareil de correction auditive, données d'adaptation, cycle de commande, algorithmes de calcul, etc.) de l'appareil de correction auditive devant être programmé sont mémorisées dans chaque module de programme de société, et dans lequel un autre poste de connexion (2) est prévu pour un module de programme maître (5), de sorte que, lors du branchement de l'appareil de programmation, le module de programme maître est sélectionné et une détermination peut être faite par l'intermédiaire du module de programme maître, au moyen d'une opération de lecture des modules de programmes de sociétés, pour déterminer si un emplacement de connexion (3) est occupé ou non et quels modules (4a-4n) de programmes de sociétés sont présents dans les emplacements de connexion, et que le module de programme maître (5) gère un réglage d'une autre mémoire (8), dans laquelle des paramètres individuels d'appareils de correction auditive de différents fabricants peuvent être mémorisés dans des zones de mémoire affectées, les zones de mémoire étant protégées par un verrouillage vis-à-vis d'un accès non autorisé aux données.

2. Appareil de programmation suivant la revendication 1, caractérisé par le fait que le fabricant et/ou le type de l'appareil de correction auditive à programmer sont affichés sur un dispositif d'affichage (6).

3. Appareil de programmation suivant les revendications 1 et 2, caractérisé par le fait que le cycle de commande peut être affiché sur le dispositif d'affichage (6), pour le module de programme de société (4a-4n), qui est situé respectivement à l'emplacement de connexion.

4. Appareil de programmation suivant la revendication 1, caractérisé par le fait que l'autre mémoire (8) est un circuit comportant une mémoire d'enregistrement-lecture (RAM) non volatile et les ensembles individuels de paramètres de différents appareils de correction auditive sont des ensembles de paramètres (SETUP) fixés et mémorisés par un fabricant d'appareils de correction auditive.

5. Appareil de programmation suivant la revendication 4, caractérisé par le fait que le circuit (mémoire 8) peut être inséré et être remplacé en tant que module dans l'appareil de programmation (poste de connexion 9).

6. Appareil de programmation suivant les revendications 1 et 4, caractérisé par le fait que dans la mémoire d'enregistrement-lecture (RAM) non volatile, les zones de mémoire sont des mémoires secondaires, qui sont associées, par le module de programme maître (5), aux différents modules (4a-4n) de programmes de sociétés et que le module de programme maître garantit que chaque module de programme de société n'a qu'un accès à la mémoire secondaire, qui lui est associée par le module de programme maître, de la mémoire d'enregistrement-lecture non volatile.

7. Appareil de programmation suivant les revendications 1 et 6, caractérisé par le fait que pour le réglage précis de l'appareil de correction auditive devant être programmé, il est prévu plusieurs réglages de base différents et que le constructeur de l'appareil de correction auditive peut mémoriser, en plus de ces réglages de base, des réglages établis en fonction de ses exigences individuelles.

8. Appareil de programmation suivant la revendication 7, caractérisé par le fait que pour la comparaison immédiate de différentes valeurs acoustiques élaborées pendant la phase d'adaptation, on peut sélectionner d'autres emplacements de mémoire.

9. Appareil de programmation suivant l'une des revendications 1 à 8, caractérisé par le fait que les paramètres réglés des appareils de correction auditive peuvent être transférés, par l'intermédiaire d'une interface standard (12) dans l'appareil de programmation, à un ordinateur personnel ou à une imprimante.

10. Appareil de programmation suivant la revendication 1, caractérisé par le fait que l'interface (7), qui est présente entre l'appareil de programmation et un appareil de correction auditive, est caractérisée par le fait que le réglage de différents niveaux de tension et de différents seuils de comparaison s'effectue au moyen de convertisseurs numérique/analogique commandés par un logiciel, qu'une interrogation d'impédance est exécutée au moyen de convertisseurs analogique/numérique, qu'un réglage du fonctionnement en semi-duplex et en duplex total est exécuté au moyen d'interrupteurs à semiconducteurs commandés par un logiciel et qu'un branchement et un débranchement de différentes résistances élévatrices et réductrices est exécuté au moyen d'interrupteurs à semiconducteurs commandés par un logiciel.

11. Appareil de programmation suivant les revendications 1 et 10, caractérisé par un commutateur servant à réaliser l'adaptation pour les deux oreilles.

12. Appareil de programmation suivant la revendication 1, caractérisé par le fait qu'il comporte une interface parallèle et au moins une interface série (14 et 12, 15), qui sont raccordées à un multiplexeur (16) de telle sorte que le multiplexeur (16) est commandé par l'intermédiaire de l'interface parallèle (14) et que l'interface série (15) peut être commutée sur l'une des sorties (17.1 à 17.n) du multiplexeur (16).

13. Appareil de programmation suivant la revendication 12, caractérisé par le fait que le multiplexeur (16) comporte des relais pour la commutation de l'interface série (15).
